# EUROPEAN PATENT APPLICATION

(11) **EP 4 563 371 A1**
(43) Date of publication of application: **04.06.2025**
(21) Application number: 24214162.0
(22) Date of filing: 20.11.2024
(51) Int. Cl.: B60C 11/03, B60C 11/11, B60C 11/12, B60C 11/13

(54) **TWO-WHEELED VEHICLE TIRE FOR RUNNING ON ROUGH TERRAIN**

(30) Priority: 30.11.2023 JP 2023202793
(71) Applicant: Sumitomo Rubber Industries, Ltd., Kobe-shi, Hyogo 651-0072 (JP)
(72) Inventor: NONAKA, KENJ, Kobe-shi, 651-0072 (JP)
(74) Representative: Manitz Finsterwald Patent- und Rechtsanwaltspartnerschaft mbB

(57) **Abstract**

The present invention is a two-wheeled vehicle tire for running on rough terrain having a tread portion (2). The tread portion (2) includes a first tread edge (T1), a second tread edge (T2), a tread development width (TWe), a tire equator (C), a crown region (6), and side regions (7). The tread portion (2) includes a plurality of crown blocks (10) and a plurality of outer blocks (20). Each of the outer blocks (20) has a ground contacting surface (30s, 40s) at least provided with a narrow groove (15) or configured as a stepped surface (25) including a base surface (26) and a protruding surface (27) locally protruding outward in a block height direction with respect to the base surface (26). Each of the crown blocks (10) has a ground contacting surface (10s) provided with the narrow groove (15) and configured as a non-step surface (28) without the protruding surface (27).

## Description

### RELATED APPLICATIONS

This application claims the benefit of foreign priority to Japanese Patent Applications No. JP2023-202793, filed November 30, 2023, which is incorporated by reference in its entirety.

### FIELD OF THE INVENTION

The present invention relates to a two-wheeled vehicle tire for running on rough terrain.

### BACKGROUND OF THE INVENITON

Japanese unexamined patent application publication No. 2020-179744 (Patent Document 1) has proposed a motorcycle tire for running on rough terrain which has a tread portion provided with a plurality of first blocks. Each of the first blocks includes a ground contacting surface, a pair of sipes extending to divide the ground contacting surface without intersecting each other, a first portion formed between the pair of sipes, and a pair of second portions formed on both outer sides of the pair of the sipes. Further, the first portion has a block height different from a block height of each of the second portions. Furthermore, the Patent Document 1 discloses a detailed embodiment in which middle blocks are configured as the first blocks described above.

### SUMMARY OF THE INVENTION

When the blocks are configured to have ground contacting surfaces with narrow grooves or stepped surfaces, as in the tire described above, edge components of the blocks are increased, therefore, it is possible that traction performance and braking performance during straight running and during cornering are improved.

However, if the above-described narrow grooves and stepped surfaces are employed in only some blocks, i.e., not all blocks, the edge components may differ significantly from block to block, which may result in deterioration of the transient characteristics of grip and response perceived by the driver during rolling (hereinafter referred to as "roll characteristics").

Further, when the blocks near the tire equator are configured to have the stepped surfaces, the tire outer diameter increases compared to the tire without the stepped surface, which necessitates adjusting the tire outer diameter to within specifications by a component other than the blocks. In this case, there is also concern that adjustments such as reducing the block height or decreasing the gauge of the tread rubber located radially inside the blocks, for example, may impair the shock-absorbing properties of the tire.

The present invention was made in view of the above, and a primary object thereof is to provide a two-wheeled vehicle tire for running on rough terrain capable of exerting excellent roll characteristics while maintaining the shock-absorbing properties.

The present invention is a two-wheeled vehicle tire for running on rough terrain having a tread portion,
wherein the tread portion including:
a tire equator;
a first tread edge on one side in a tire axial direction of the tire equator;
a second tread edge on the other side in the tire axial direction of the tire equator;
a tread development width from the first tread edge to the second tread edge;
a crown region centered on the tire equator and having a width of 20% of the tread development width;
a pair of side regions on both axially outer sides, one side region on each side, of the crown region;
a plurality of crown blocks provided in the crown region; and
a plurality of outer blocks provided in the side regions,
wherein each of the outer blocks has a ground contacting surface at least provided with a narrow groove or configured as a stepped surface including a base surface and a protruding surface locally protruding outward in a block height direction with respect to the base surface, and
each of the crown blocks has a ground contacting surface provided with the narrow groove and configured as a non-step surface without the protruding surface.

It is possible that the two-wheeled vehicle tire for running on rough terrain exerts excellent rolling characteristics while maintaining the shock-absorbing properties by adopting the above configuration.

### BRIEF DESCRIPTION OF THE DRAWINGS

FIG. 1 is a lateral cross-sectional view of a tread portion of a two-wheeled vehicle tire for running on rough terrain according to an embodiment of the present invention.
FIG. 2 is a development view of the tread portion of FIG. 1.
FIG. 3 is an end view taken along B-B line of FIG. 2.
FIG. 4 is an end view taken along C-C line of FIG. 2.
FIG. 5 is a cross-sectional view of an outer block according to another embodiment.
FIG. 6 is a cross-sectional view of an outer block according to another embodiment.
FIG. 7 is an end view taken along D-D line of FIG. 2.
FIG. 8 is an end view taken along E-E line of FIG. 2.
FIG. 9 is an enlarged view of one of shoulder blocks in FIG. 2.
FIG. 10 is an enlarged view of one of middle blocks in FIG. 2.
FIG. 11 is an enlarged view of one of crown blocks in FIG. 2.
FIG. 12 is a development view of the tread portion according to another embodiment of the present invention.
FIG. 13 is a development view of the tread portion in Reference 1.
FIG. 14 is an enlarged cross-sectional view of one of the crown blocks in Reference 2.

### DETAILED DESCRIPTION OF THE INVENTION

An embodiment of the present invention will now be described in conjunction with accompanying drawings. The drawings are described inclusive of the features of the present invention, but may contain exaggerated expressions or expressions that differ from the actual dimensional ratios of the structure to aid in understanding the present invention. Throughout each embodiment, identical or common elements are assigned with the same reference signs, and redundant explanations are omitted.

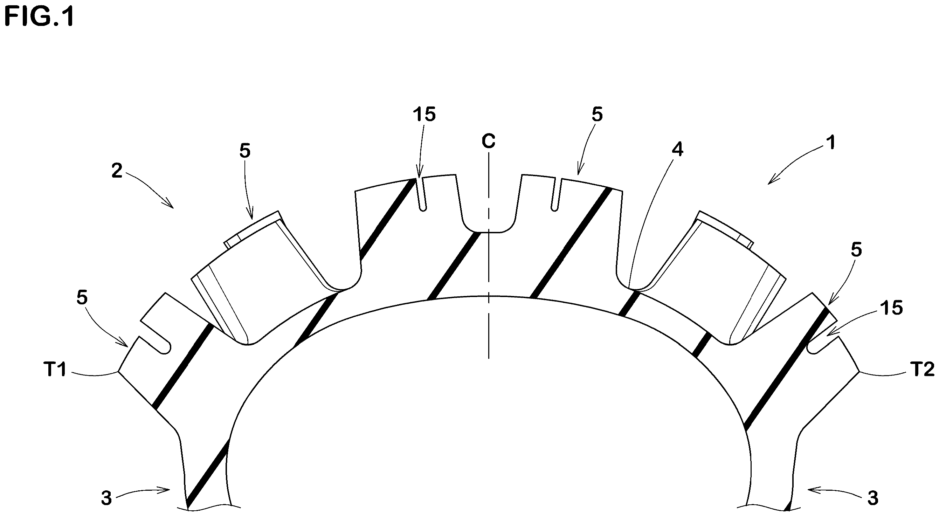

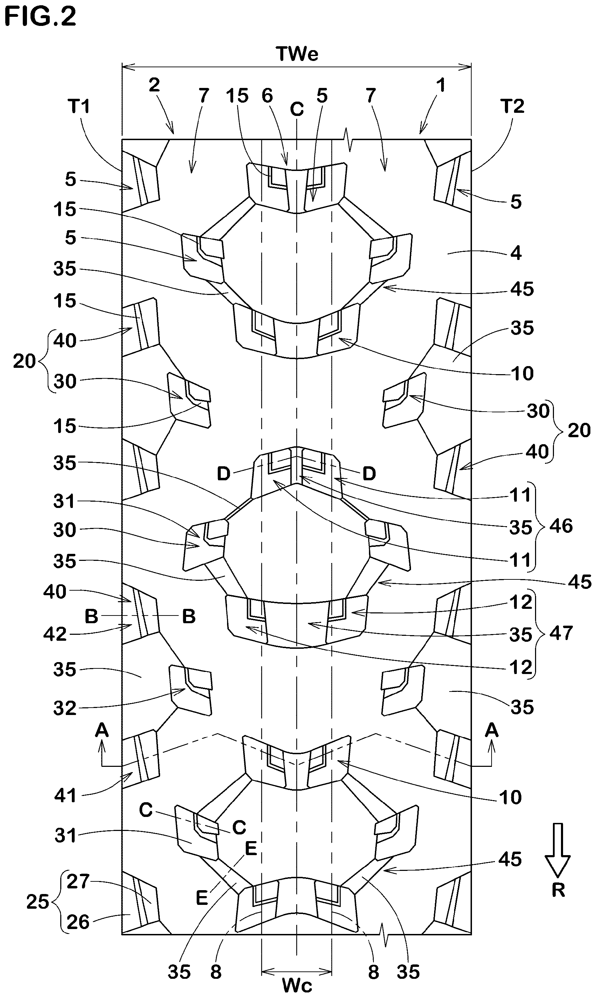

FIG. 1 shows a lateral cross-sectional view of a tread portion 2 of a two-wheeled vehicle tire for running on rough terrain (hereinafter, may be simply referred to as "tire") 1 according to the present embodiment in a standard state. FIG. 2 is a planar development of the tread portion 2 of the tire 1. FIG. 1 corresponds to a cross-sectional view taken along A-A line of FIG. 2.

In the case of tires for which various standards have been established, the term "standard state" refers to a state in which the tire is mounted on a standard rim, inflated to a standard inner pressure, and loaded with no tire load. In the case of tires for which various standards have not been established, the standard state means a standard use state according to the purpose of use of the tire and being loaded with no tire load. In the present specification, unless otherwise noted, the dimensions and the like of various parts are the values measured in the standard state described above.

The term "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

The term "standard inner pressure" refers to air pressure specified for the concerned tire by a standard included in a standardization system on which the tire is based, for example, the maximum air pressure in JATMA, the maximum value listed in the "TIRE LOAD LIMITS AT VARIOUS COLD INFLATION PRESSURES" table in TRA, and "INFLATION PRESSURE" in ETRTO.

As shown in Figure 1, the tire 1 in the present embodiment is for motorcycles and is suitable as a tire for motocross competition, for example. The tire 1 of the present embodiment is suitably used as a rear wheel tire for motocross vehicles, for example. However, the present invention is not limited to such a manner. The tread portion 2 of the tire 1 in the present embodiment has an outer surface curved in an arc shape so as to be convex outward in the tire radial direction in a lateral cross section.

The tire 1 in the present embodiment has a carcass and a tread reinforcement layer (not shown), for example. For these, known configurations may be employed as appropriate. Further, the tread portion 2 includes a plurality of blocks 5 raised from a tread bottom surface 4. When the tire 1 of the present embodiment is run on rough terrain, the blocks 5 sticks into the road surface and exerts high reaction force. Therefore, the tread bottom surface 4 can also contact the road surface.

As shown in FIG. 2, the tread portion 2 of the tire 1 of the present invention has a directional pattern bound with an intended tire rotational direction (R). The tire rotational direction (R) is indicated by letters or symbols on the sidewall portion 3 (shown in FIG. 1), for example. However, the present invention is not limited to such a manner.

The tread portion 2 includes a first tread edge T1, a second tread edge T2, a tread development width (TWe) from the first tread edge T1 to the second tread edge T2, and the tire equator (C). The first tread edge T1 and the second tread edge T2 each mean the axially outer edges of the ground contacting surfaces of the blocks 5 included in the axially outermost block row among the blocks 5 arranged in the tread portion 2 in a respective axial half of the tire.

The tread development width (TWe) corresponds to the distance in the tire axial direction from the first tread edge T1 to the second tread edge T2 when the tread portion 2 is developed on a plane. The tire equator (C) is a virtual line extending parallel to the tire circumferential direction on the axial center position of the tread portion.

Tread portion 2 includes a crown region 6 and side regions 7. The crown region 6 has a width (Wc) of 20% of the tread development width (TWe) centered on the tire equator (C). The side regions 7 are the regions located on both axially outer sides, one on each side, of the crown region 6. That is, the two side regions 7 are arranged so as to sandwich the crown region 6. In FIG. 2, boundaries 8 between the crown region 6 and the side regions 7 are indicated by a double-dashed line.

The tread portion 2 includes a plurality of crown blocks 10 provided in the crown region 6 and a plurality of outer blocks 20 provided in the side regions 7. In the present embodiment, in the development view of the tread portion 2, the blocks 5 having the ground contacting surfaces with the boundaries 8 between the crown region 6 and the side regions 7 passing through correspond to the crown blocks 10. In other words, each of the outer blocks 20 has the entire ground contacting surface located axially outside a respective one of the boundaries 8. It should be noted that the ground contacting surface of the block means the area of the outer surface of the block that extends along the virtual tread bottom surface 4 passing through the root of the block, and more specifically, the area where the angle with respect to the tread bottom surface 4 is 30 degrees or less.

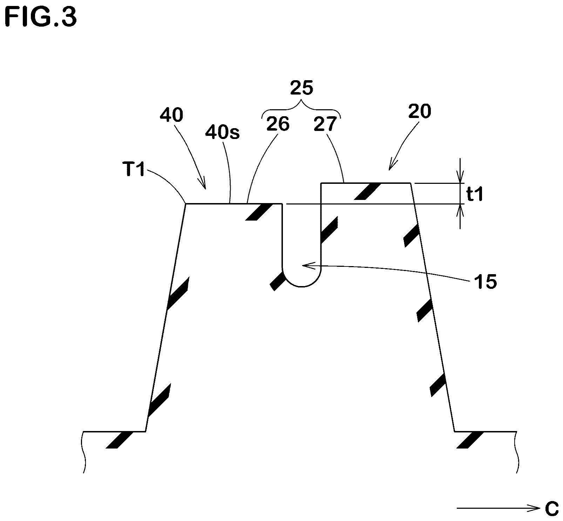

The outer blocks 20 include a plurality of shoulder blocks 40 including the first tread edge T1 or the second tread edge T2 and a plurality of middle blocks 30 arranged between the shoulder blocks 40 and the crown region 6 in each axial half of the tread portion 2. FIG. 3 is an end view taken along B-B line of FIG. 2, showing a cross-sectional view of one of the shoulder blocks 40.

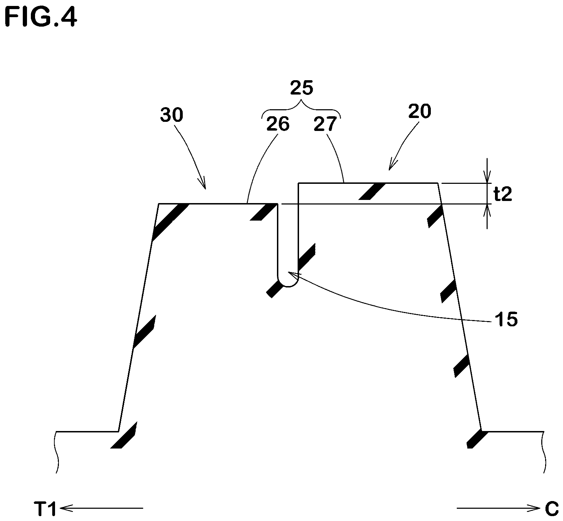

Further, FIG. 4 is an end view taken along C-C line of FIG. 2, showing a cross-sectional view of one of the middle blocks 30.

It should be noted that in the figures of the present specification showing an enlarged cross-section of the block, the curvature components in the ground contacting surface of the actual block are excluded as appropriate from the viewpoint of making the characteristics of the block easier to understand.

As shown in FIG. 3 and FIG. 4, the ground contacting surface of each of the outer blocks 20 is provided with a narrow groove 15 or configured as a stepped surface 25 including a base surface 26 and a protruding surface 27 that protrudes locally outward in the block height direction relative to the base surface 26. It should be noted that the entire protruding surface 27 protrudes outward in the block height direction relative to the base surface 26 in the present embodiment. The above-mentioned narrow groove 15 means a groove having a width of 3.0 mm or less, which includes a minute incision known as so called a sipe.

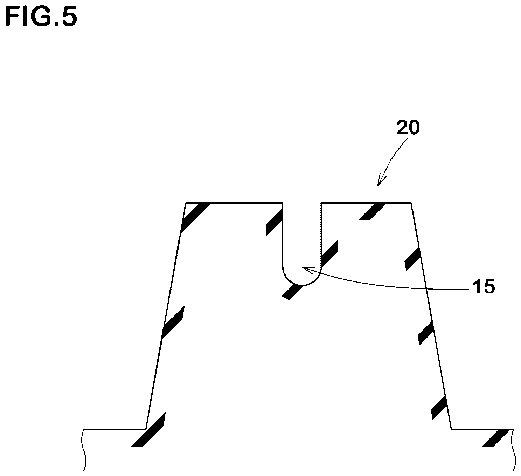

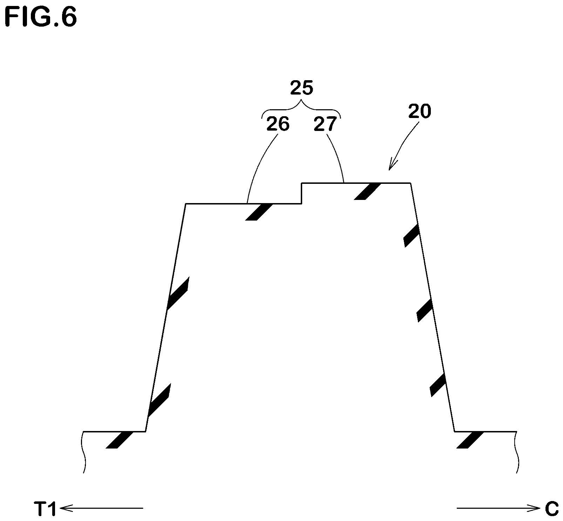

Each of the outer blocks 20 in the present embodiment has the narrow groove 15 and has the stepped surface 25 formed by two surface portions divided by the narrow grooves 15, one of which is the base surface 26 and the other one of which is the protruding surface 27. However, the present invention is not limited to such a manner. FIG. 5 and FIG. 6 show cross-sectional views of the outer block 20 in other embodiments. As shown in FIG. 5, each of the outer blocks 20 of the present invention may only be provided with the narrow groove 15 without having the stepped surface with the both surface portions substantially have the same height. Further, as shown in FIG. 6, each of the outer blocks 20 of the present invention may have the stepped surface 25 including the base surface 26 and the protruding surface 27 without being provided with a narrow groove.

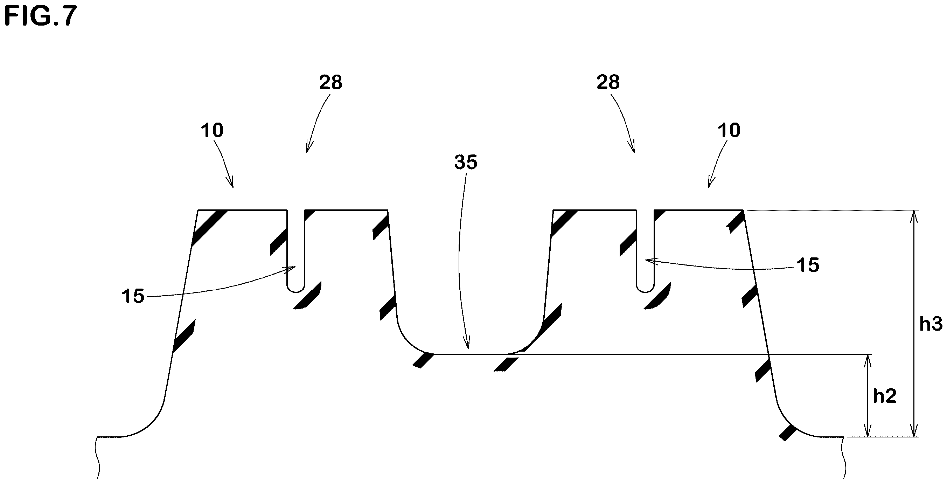

FIG. 7 shows an end view taken along D-D line of FIG. 2 as a cross-sectional view of the crown blocks 10. As shown in FIG. 7, the ground contacting surface of each of the crown blocks 10 is a non-step surface 28 having the narrow groove 15 and without having the protruding surface 27 (shown in FIG. 3 and FIG. 4). It should be noted that the non-step surface 28 means the surface having two surface portions divided by the narrow groove 15 without forming a step since the height of one surface portion is substantially the same as the height of the other surface portion. However, from the point of view of allowing for unavoidable errors in tires, which are rubber products, surfaces that include steps of 0.5 mm or less shall be treated as non-step surfaces.

By adopting the above configuration, the tire of the present invention can exert excellent roll characteristics while maintaining the shock-absorbing properties. The reasons for this are as follows.

As shown in FIGs. 3 through 6, in the tire of the present invention, the ground contacting surface of each of the outer blocks 20 is formed with the narrow grooves 15 or formed as a stepped surface 25. Further, as shown in FIG. 7, the ground contacting surface of each of the crown blocks 10 has the narrow groove 15 formed therein and is the non-step surface 28 which does not have the protruding surface. As a result, as shown in FIG. 2, the edge components of all the blocks 5 are increased by the narrow grooves 15 or the stepped surface 25, and therefore improvement in the roll characteristics can be expected.

On the other hand, conventionally, when the stepped surfaces are formed on the blocks near the tire equator, the tire outer diameter increases compared to the case without the stepped surface. This may result in the need to adjust the tire outer diameter to fit within the standard by reducing the block height or by reducing the gauge of the tread rubber located radially inside the blocks, and these adjustments may impair the shock-absorbing properties of the tire. In contrast, in the present invention, the ground contacting surfaces of the crown blocks 10 are the non-step surfaces 28, therefore, the tire outer diameter is not increased unnecessarily, thereby, it is possible that the shock-absorbing properties are maintained.

A more detailed configuration of the present embodiment will be described below. It should be noted that the configuration described below shows a specific manner of the present embodiment. Therefore, it goes without saying that the present invention can achieve the above-mentioned effects even if it does not have the configuration described below. Further, even if any one of the configurations described below is applied alone to the tire 1 of the present invention having the above-described characteristics, an improvement in performance according to the applied configuration can be expected. Furthermore, when some of the configurations described below are applied in combination, a combined improvement in performance can be expected according to the configurations combined. Also, in the following, the outer blocks 20 arranged on the first tread edge T1 side of the tire equator (C) are shown as examples, but these configurations can also be applied to the outer blocks 20 arranged on the second tread edge T2 side of the tire equator (C).

In the entire tread portion 2, it is preferred that the number N1 of the outer blocks 20 having the protruding surfaces 27 (both the shoulder blocks 40 and the middle blocks 30 in the present embodiment) is 75% or less of the total number Nt of the crown blocks 10 and the outer blocks 20. In a more preferred manner, the number N1 is from 60% to 70% of the total number Nt in the present embodiment. Such an arrangement of the blocks can further improve the roll characteristics.

In the entire tread portion 2, the number N2 of the blocks 5 having the narrow grooves 15 (all of the blocks 5 have the narrow grooves 15 in the present embodiment) is in the range from 40% to 200% of the number N1, and preferably in the range from 130% to 170%. Such an arrangement of the blocks 5 can improve the roll characteristics while maintaining anti-wear performance of the tread portion 2.

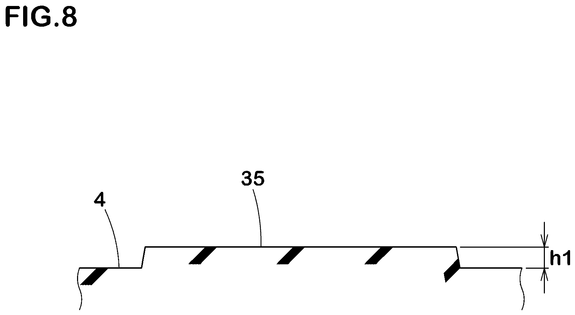

The tread portion 2 in the present embodiment has tie bars 35 each connecting a respective pair of the blocks 5 adjacent to each other. FIG. 8 shows an end view taken along E-E line of FIG. 2 as an example of the tie bar 35. As shown in FIG. 2 and FIG. 8, the tie bars 35 are locally raised from the tread bottom surface 4, and can increase the rigidity of the base portions of the blocks. Further, as shown in FIG. 8, a raised height (h1) of each of the tie bars 35 is less than 20% of the height of the adjacent blocks, and specifically, from 1.0 to 2.5 mm. However, the dimensions of the tie bars 35 that connect the crown blocks 10 are different from those described above and will be described later.

As shown in FIG. 2, each of the crown blocks 10 is connected, directly or indirectly, to a respective one of the crown blocks 10 adjacent thereto and adjacent ones of the outer blocks 20 by the tie bars 35. Each of the outer blocks 20 is connected to the outer blocks 20 adjacent thereto or adjacent ones of the crown blocks 10 by one or more tie bars 35. As a result, the collapse of each block 5 is suppressed, thereby, the traction performance and the breaking performance are improved.

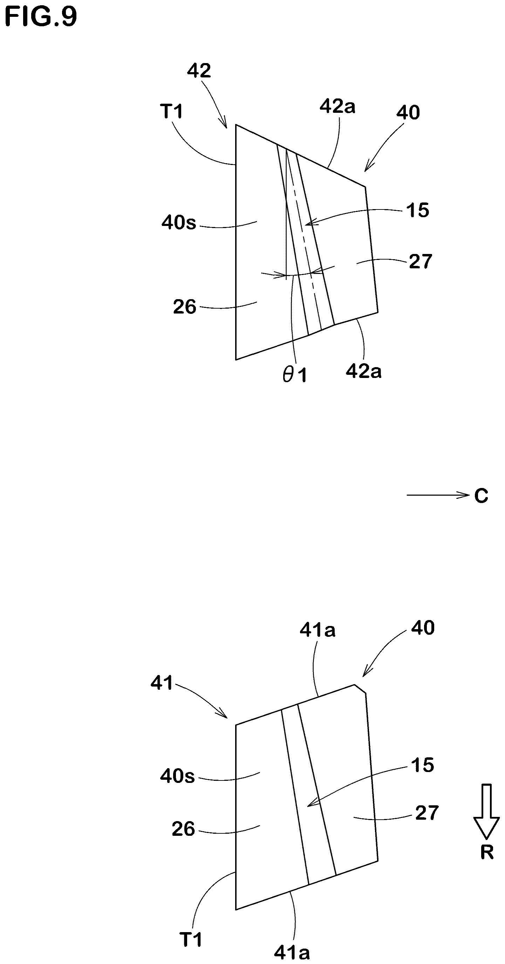

FIG. 9 shows the shoulder blocks 40. As shown in FIG. 9, the ground contacting surface of each of the shoulder blocks 40 in the present embodiment is provided with the narrow groove 15 extending in the tire circumferential direction. This narrow groove 15 completely crosses the ground contacting surface (40s) of each of the shoulder blocks 40 in the tire circumferential direction to divide the ground contacting surface (40s) into the base surface 26 located on the first tread edge T1 side and the protruding surface 27 located on the tire equator (C) side.

It is preferred that the narrow groove 15 is inclined to the tire equator (C) side as it goes toward the heel side (leading side; first side in the tire circumferential direction) in the tire rotational direction (R), for example. The narrow groove 15 has an angle 01 the with respect to the tire circumferential direction of 45 degrees or less, for example, and preferably in the range from 5 to 15 degrees. It should be noted that when the narrow groove 15 does not extend linearly, the angle θ1 refers to the average angle of the narrow groove 15 with respect to the tire circumferential direction. The average angle corresponds to an angle obtained by dividing the narrow groove 15 into a plurality of minute regions and dividing the sum of the angles of the minute regions relative to the tire circumferential direction by the number of the minute regions. Hereafter, the angles of various parts shall be measured in the same manner.

In a more preferred embodiment, it is preferred that the narrow groove 15 has a groove width increasing continuously, over the entire length of the narrow groove in the present embodiment, toward the heel side in the tire rotational direction (R). As a result, the narrow groove 15 has a maximum groove width at its end on the heel side, and a minimum groove width at its end on the toe side (trailing side; second side in the tire circumferential direction) in the tire rotational direction (R). Further, the minimum groove width is in the range from 65% to 80% of the maximum groove width, for example. The narrow grooves 15 configured as such can provide a large reaction force during braking, therefore, it is possible that the braking performance is improved.

As shown in FIG. 3, each of the shoulder blocks 40 in the present embodiment has the narrow groove 15 formed therein and the ground contacting surface (40s) is configured as the stepped surfaces 25. Further, this stepped surface 25 has the base surface 26 disposed on the first tread edge T1 side and the protruding surface 27 disposed on the tire equator (C) side. An amount of step difference (t1) between the base surface 26 and the protruding surface 27 is in the range from 1.0 to 2.0 mm, for example. The shoulder blocks 40 configured as such help improve cornering performance.

As shown in FIG. 9, the area of the base surface 26 is from 55% to 65% of the total area of the ground contacting surface (40s) in each of the shoulder blocks 40. The total area of the ground contacting surface is the sum of the area of the base surface 26 and the area of the protruding surface 27, and the same applies hereafter. Further, the area of the protruding surface 27 is from 35% to 45% of the total area of the ground contacting surface (40s) in each of the shoulder blocks 40. This allows the shoulder blocks 40 to easily dig into the road surface while maintaining the durability of the shoulder blocks 40.

The shoulder blocks 40 include first shoulder blocks 41 and second shoulder blocks 42 with different shapes of the ground contacting surface. The ground contacting surface of each of the first shoulder blocks 41 has two edges (41a) extending in the tire axial direction and inclined to the same side with respect to the tire axial direction. Specifically, the two edges (41a) of each of the first shoulder blocks 41 are inclined to the toe side in the tire rotational direction (R) as it goes from the first tread edge T1 toward the tire equator (C). The first shoulder blocks 41 configured as such can exert excellent traction performance during cornering.

The ground contacting surface of each of the second shoulder blocks 42 has two edges (42a) extending in the tire axial direction and inclined to opposite sides to each other with respect to the tire axial direction. In a preferred embodiment, these two edges (42a) are inclined so as to approach each other toward the tire equator (C). As a result, the ground contacting surface of each of the second shoulder blocks 42 has a circumferential length that continuously decreases toward the tire equator (C). The second shoulder blocks 42 configured as such have a relatively high rigidity on the first tread edge T1 side, which helps to improve the roll characteristics.

As shown in FIG. 2, it is preferred that each of the first shoulder blocks 41 is connected to one of the second shoulder blocks 42 adjacent thereto by a respective one of the tie bars 35. In the present embodiment, these shoulder blocks 40 are also connected to a respective one of second middle blocks 32 described below by a respective one of the tie bars 35. This makes it difficult for the shoulder blocks 40 to collapse, therefore, the traction performance and the braking performance are improved. It should be noted that the tie bars 35 are omitted in FIG. 9.

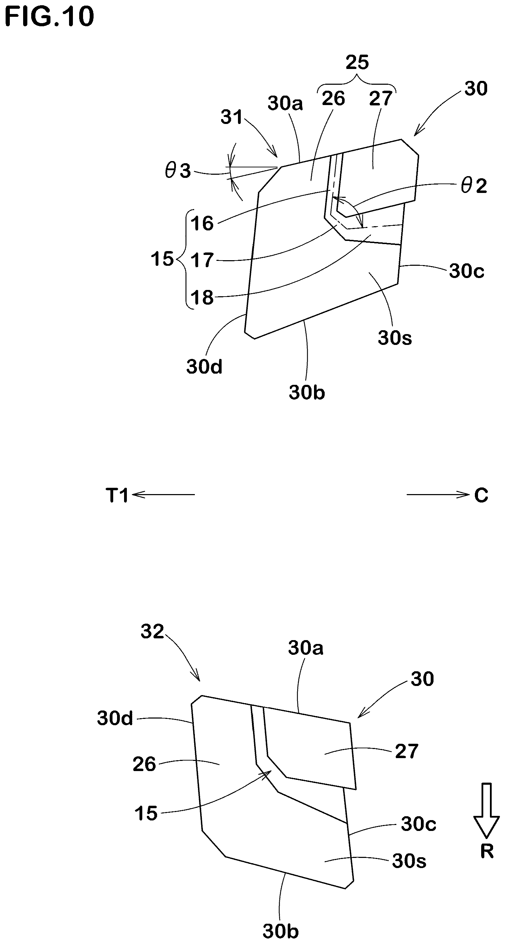

FIG. 10 shows an enlarged view of a plurality of the middle blocks 30. As shown in FIG. 10, each of the middle blocks 30 in the present embodiment has a ground contacting surface (30s) provided with the narrow groove 15. The ground contacting surface (30s) has outer peripheral edges including a pair of axial edges extending in the tire axial direction and a pair of circumferential edges extending in the tire circumferential direction. The narrow groove 15 extends in a curved or bent manner so as to connect one of the axial edges with one of the circumferential edges. As a result, the narrow groove 15 divides the ground contacting surface (30s) of each of the middle blocks 30 into the base surface 26 and the protruding surface 27.

The narrow groove 15 extends from a toe side edge (30a) extending in the tire axial direction on the toe side in the tire rotational direction (R) to a tire equator side edge (30c) extending in the tire circumferential direction on the tire equator (C) side among the outer peripheral edges of the ground contacting surface (30s), for example. Further, the narrow groove 15 of each of the middle blocks 30 includes a first groove portion 16, a second groove portion 17, and a third groove portion 18. The first groove portion 16 extends in the tire circumferential direction from the toe side edge (30a). The second groove portion 17 is continuous with the first groove portion 16 and extends at an angle with respect to the tire axial direction. The third groove portion 18 extends in the tire axial direction from the second groove portion 17 to the tire equator side edge (30c). An angle θ2 between the first groove portion 16 and the third groove portion 18 is in the range from 70 to 110 degrees, and preferably from 80 to 90 degrees, for example. The narrow grooves 15 configured as such provide friction in multiple directions, thereby, it is possible that the roll characteristics and the traction performance are improved in a good balance.

It should be noted that when the first groove portion 16 and the third groove portion 18 are non-linear, the angle θ2 corresponds to the sum of the average angle of the first groove portion 16 with respect to an arbitrary reference line and the average angle of the third groove portion 18 with respect to the reference line, for example. The arbitrary reference line is an imaginary straight line inclined at 45 degrees with respect to the tire circumferential direction, for example. The method for measuring the average angle is as described above. Furthermore, the angle between two members described below can also be determined in a similar manner.

In a preferred embodiment, the first groove portion 16 of the narrow groove 15 has a constant groove width along a longitudinal direction thereof in each of the middle blocks 30. Further, it is preferred that the groove width of the narrow groove 15 increases continuously from the first groove portion 16 side end of the second groove portion 17 to the tire equator side edge (30c) side end of the third groove portion 18 in each of the middle blocks 30. As a result, the narrow grooves 15 has a maximum groove width at the end thereof communicating with the tire equator side edge (30c), and the narrow groove 15 has a minimum groove width at the first groove portion 16 thereof in each of the middle blocks 30. Further, the minimum groove width is in the range from 20% to 40% of the maximum groove width in the narrow groove 15 of each of the middle blocks 30, for example. The narrow grooves 15 configured as such can further improve the roll characteristics.

As shown in FIG. 4, each of the middle blocks 30 in the present embodiment has the narrow groove 15 formed therein and the ground contacting surface (30s) configured as the stepped surface 25. Each of the middle blocks 30 has an amount of step difference (t2) between the base surface 26 and the protruding surface 27 in the range from 1.0 to 2.0 mm, for example.

Further, as shown in FIG. 10, the protruding surface 27 included in the stepped surface 25 of each of the middle blocks 30 is a surface surrounded by the narrow groove 15, a part of the toe side edge (30a), and a part of the tire equator side edge (30c). Furthermore, the base surface 26 included in the stepped surface 25 of each of the middle blocks 30 is disposed so as to surround a part of the protruding surface 27. As a result, the base surface 26 is a surface surrounded by the narrow groove 15, the remainder of the toe side edge (30a), the remainder of the tire equator side edge (30c), a heel side edge (30b) extending in the tire axial direction on the heel side in the tire rotational direction (R), and a tread edge side edge (30d) extending in the tire circumferential direction on the respective tread edge side (the first tread edge T1 side in this case). Thereby, the protruding surface 27 has a smaller area than an area of the base surface 26 in the ground contacting surface (30s) of each of the middle blocks 30. The middle blocks 30 configured as such easily stick into uneven road surfaces and thus can exert a large reaction force.

The area of the base surface 26 is in the range from 70% to 85% of a total area of the ground contacting surface (30s) in each of the middle blocks 30. Further, the area of the protruding surface 27 is in the range from 15% to 30% of the total area of the ground contacting surface (30s) in each of the middle blocks 30. Thereby, it is possible that the roll characteristics are improved while the durability of the middle blocks 30 is maintained.

It is preferred that the heel side edge (30b) and the toe side edge (30a) are inclined to the same side with respect to the tire axial direction in each of the middle blocks 30. These edges have an angle θ3 in the range from 5 to 30 degrees with respect to the tire axial direction, for example. Further, the middle blocks 30 in the present embodiment include blocks with these edges inclined to one side and blocks with these edges inclined to the other side with respect to the tire axial direction. In other words, there are two types of the middle blocks 30 with regard to the edge inclination, and they are the middle blocks 30 with the heel side edge (30b) and the toe side edge (30a) inclined to the toe side in the tire rotational direction (R) as they go toward the first tread edge T1 and the middle blocks 30 with these edges inclined to heel side in the tire rotational direction (R) as they go toward the first tread edge T1. These two types of the middle blocks 30 are arranged in the tire circumferential direction in a mixed manner. Such an arrangement of the middle blocks 30 can provide stable reaction force on a variety of road surface conditions and thus can further improve the roll characteristics.

The middle blocks 30 include first middle blocks 31 and the second middle blocks 32 arranged alternately, one by one in each axial half of the tread portion 2 in the present embodiment, in the tire circumferential direction, for example. As shown in FIG. 2, the first middle blocks 31 are connected to the crown blocks 10 by the tie bars 35. The second middle blocks 32 are connected to the shoulder blocks 40 by the tie bars 35. The tie bars 35 connecting the first middle blocks 31 and the crown blocks 10 have the same raised height (h1) (shown in FIG. 8) as the aforementioned tie bars 35. Due to the arrangement of the tie bars 35 described above, the first middle blocks 31 and the second middle blocks 32 have different directions in which the blocks tend to collapse (or lean or fall). Therefore, when running on a muddy road surface, these blocks tend to collapse in different directions, which makes it difficult for mud to be retained around these blocks. Due to such an action, sustained high grip performance is exerted. It should be noted that these tie bars 35 are omitted in FIG. 10.

In a preferred embodiment, one first middle block 31 is connected by two tie bars 35 with two crown blocks 10 that are one crown block 10 adjacent on one side in the tire circumferential direction and another crown block 10 on the other side in the tire circumferential direction. In addition, the tie bars 35 connecting the first middle blocks 31 and the crown blocks 10 include those in which the widths increase continuously from the crown blocks 10 to the first middle blocks 31, those in which the widths decrease continuously from the crown blocks 10 to the first middle blocks 31, and those in which the widths are constant. In the present embodiment, these three types of the tie bars 35 are arranged in the tire circumferential direction in a mixed manner.

The second middle blocks 32 are connected with both the first shoulder blocks 41 and the second shoulder blocks 42. Specifically, one second middle block 32, one first shoulder block 41 and one second shoulder block 42 are connected by one tie bar 35 which is formed by the entirely raised area surrounded by these blocks. This arrangement of the blocks and the tie bars provides excellent roll characteristics and excellent cornering performance.

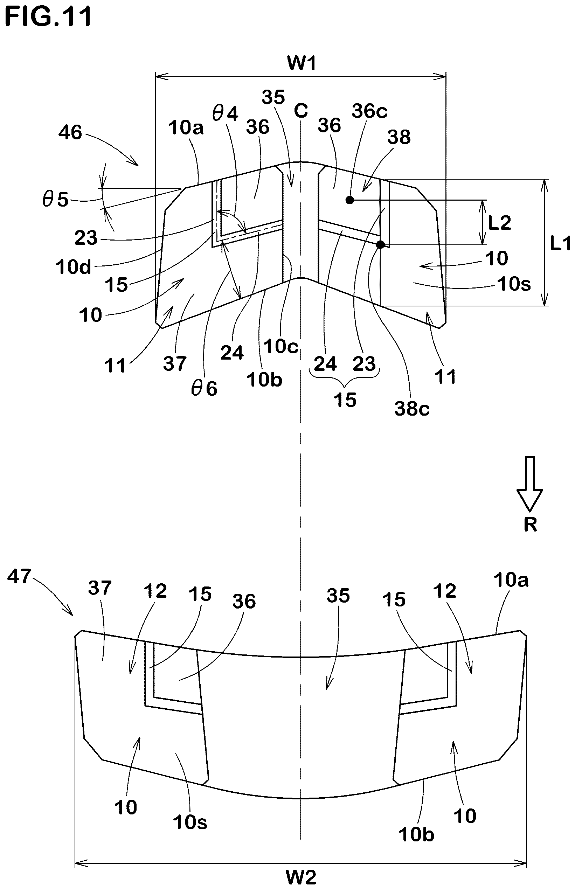

FIG. 11 shows an enlarged view of a plurality of the crown blocks 10. It should be noted that the tie bars 35 (shown in FIG. 2) connecting the first middle blocks 31 and the crown blocks 10 are omitted in FIG. 11. As shown in FIG. 11, in each of the crown blocks 10, the narrow groove 15 provided in a ground contacting surface (10s) has both ends communicating with the outer peripheral edges of the ground contacting surface (10s).

In each of the crown blocks 10, the narrow groove 15 extends from a toe side edge (10a) to a tire equator side edge (10c), for example. Of the outer peripheral edges of the ground contacting surface of each of the crown blocks 10, the toe side edge (10a) is an edge extending in the tire axial direction on the toe side in the tire rotational direction (R) and the tire equator side edge (10c) is an edge extending in the tire circumferential direction on the tire equator (C) side. Further, each of the narrow grooves 15 of the crown blocks 10 includes a circumferential portion 23 extending in the tire circumferential direction and an axial portion 24 extending in the tire axial direction. The circumferential portion 23 extends in the tire circumferential direction from the toe side edge (10a). The axial portion 24 extends from the circumferential portion 23 to the tire equator side edge (10c). An angle θ4 between the circumferential portion 23 and the axial portion 24 is in the range from 70 to 90 degrees, for example. The narrow grooves 15 configured as such of the crown blocks 10 provide friction in multiple directions and thus can exert excellent roll characteristics and excellent traction performance.

It is preferred that the narrow groove 15 extends with a constant groove width from the toe side edge (10a) side end to the tire equator side edge (10c) side end, in a preferred embodiment. In a more preferred embodiment, in the case where the narrow grooves 15 are provided in the outer blocks 20 (shown in FIG. 2), the average groove width of the narrow grooves 15 provided in the crown blocks 10 is smaller than the average groove width of the narrow grooves 15 provided in the outer blocks 20. Therefore, the roll characteristics are further improved. It should be noted that the average groove width corresponds to the opening area of the narrow groove 15 divided by the length of the narrow groove 15 (so-called periphery length) for each of the narrow grooves 15.

Each of the ground contacting surfaces (10s) of the crown blocks 10 includes a first surface 36 and a second surface 37 separated by the narrow groove 15. The first surface 36 is surrounded by the narrow groove 15, a portion of the toe side edge (10a), and a portion of the tire equator side edge (10c). The second surface 37 is disposed so as to partially surround the first surface 36. As a result, the second surface 37 is surrounded by the narrow groove 15, the remainder of the toe side edge (10a), the remainder of the tire equator side edge (10c), a heel side edge (10b), and a tread edge side edge (10d). The heel side edge (10b) is an edge of the ground contacting surface (10s) extending in the tire axial direction on the heel side in the tire rotational direction (R), and the tread edge side edge (10d) is an edge of the ground contacting surface (10s) extending in the tire circumferential direction on the first tread edge T1 side or the second tread edge T2 side (shown in FIG. 2). Thereby, the second surface 37 has a larger area than the first surface 36 in each of the crown blocks 10.

In each of the crown blocks 10, the area of the first surface 36 is in the range from 10% to 30% of the total area of the ground contacting surface (10s) of the crown block 10 (the sum of the area of the first surface 36 and the area of the second surface 37). The area of the second surface 37 is in the range from 70% to 90% of the total area of the ground contacting surface (10s) for each of the crown blocks 10. Therefore, it is possible that the traction performance and the braking performance are improved while the durability of the crown blocks 10 are maintained.

A distance L2 in the tire circumferential direction from a centroid (38c) of a virtual ground contacting surface 38 consisting of the first surface 36, the narrow groove 15, and the second surface 37 to a centroid (36c) of the first surface 36 is preferably 20% or more, more preferably from 30% to 40%, of a length L1 in the tire circumferential direction of the virtual ground contacting surface 38 on the centroid (38c) of the virtual ground contacting surface 38. Therefore, the amount of deformation in the area including the first surface 36 is increased, thereby, it is possible that the traction performance and the braking performance are further improved.

As shown in FIG. 2, throughout the tread portion 2, the sum of the areas of the first surfaces 36 of the crown blocks 10 and the areas of the protruding surfaces 27 of the outer blocks 20 is preferably in the range from 20% to 60% of the sum of the areas of the ground contacting surfaces of the blocks 5. Thereby, it is possible that the roll characteristics are improved while the durability of the tread portion 2 is maintained.

As shown in FIG. 11, it is preferred that the heel side edge (10b) and the toe side edge (10a) are inclined to the same side with respect to the tire axial direction in each of the crown blocks 10. These edges have an angle θ5 in the range from 10 to 20 degrees with respect to the tire axial direction, for example. In the present embodiment, there are two types of the crown blocks 10 with these edges inclined to opposite sides, that is, the first-type crown blocks 10 with the heel side edges (10b) and the toe side edges (10a) inclined to the toe side in the tire rotational direction (R) as they go toward the tire equator (C), and the second-type crown blocks 10 with these edges inclined to the heel side in the tire rotational direction (R) as they go toward the tire equator (C). These two types of the crown blocks 10 are arranged in the tire circumferential direction in a mixed manner. As a result, the crown blocks 10 generate frictional force in multiple directions, therefore, the traction performance is further improved.

It is preferred that an angle θ6 between the heel side edge (10b) and the axial portion 24 is 20 degrees or less, more preferably from 5 to 15 degrees, for example. Thereby, these edges work together to provide greater frictional force, therefore, the traction performance and the braking performance are improved.

As shown in FIG. 2, the crown blocks 10 include first crown blocks 11 and second crown blocks 12. Each of the first crown blocks 11 is connected by a respective one of the tie bars 35 with one of the first middle blocks 31 adjacent on the heel side in the tire rotational direction (R). Each of the second crown blocks 12 is connected by a respective one of the tie bars 35 with one of the first middle blocks 31 adjacent on the toe side in the tire rotational direction (R). It should be noted that the crown blocks 10 in the present embodiment consist of the first crown blocks 11 and the second crown blocks 12.

In the present embodiment, two first crown blocks 11 arranged so as to sandwich the tire equator (C) are connected by one of the tie bars 35 to form one first crown block pair 46. Further, two second crown blocks 12 arranged so as to sandwich the tire equator (C) are connected by one of the tie bars 35 to form one second crown block pair 47. Furthermore, the first crown block pairs 46 and the second crown block pairs 47 are arranged alternately, one by one in the present embodiment, in the tire circumferential direction. Thereby, excellent traction performance and excellent braking performance can be obtained under various road surface conditions.

As a more preferred mode, one first crown block pair 46 and one second crown block pair 47 are connected with a common one of the first middle blocks 31 by the tie bars 35 in the present embodiment. As a result, in the tread portion 2, multiple virtual annular bodies 45 are arranged in the tire circumferential direction. Each of the virtual annular bodies 45 is formed by one first crown block pair 46, one second crown block pair 47, and two first middle blocks 31 connected by the tie bars 35 so as to have a ring shape in a tread plan view. In addition, the second crown block pair 47 is located on the heel side in the tire rotational direction (R) relative to the first crown block pair 46 in each of the virtual annular bodies 45.

As shown in FIG. 7, each of the tie bars 35 that connects two crown blocks 10 adjacent to each other in the tire axial direction has a raised height (h2) greater than that of the tie bar 35 shown in FIG.8. The raised height (h2) of this type of the tie bars 35 is in the range from 20% to 50% of a height (h3) of the crown blocks 10, for example.

As shown in FIG. 11, the maximum width W2 (measured on the ground contacting surface, and the same applies hereinafter) in the tire axial direction of each of the second crown block pairs 47 is larger than the maximum width W1 in the tire axial direction of each of the first crown block pairs 46. Specifically, the maximum width W2 of each of the second crown block pairs 47 is in the range from 130% to 160% of the maximum width W1 of each of the first crown block pairs 46. Similarly, each of the tie bars 35 included in the second crown block pairs 47 has an axial width larger than an axial width of each of the tie bars 35 included in the first crown block pairs 46. Therefore, the virtual annular bodies 45 can grip more mud during running on muddy road surfaces, thereby, the traction performance and the braking performance are further improved.

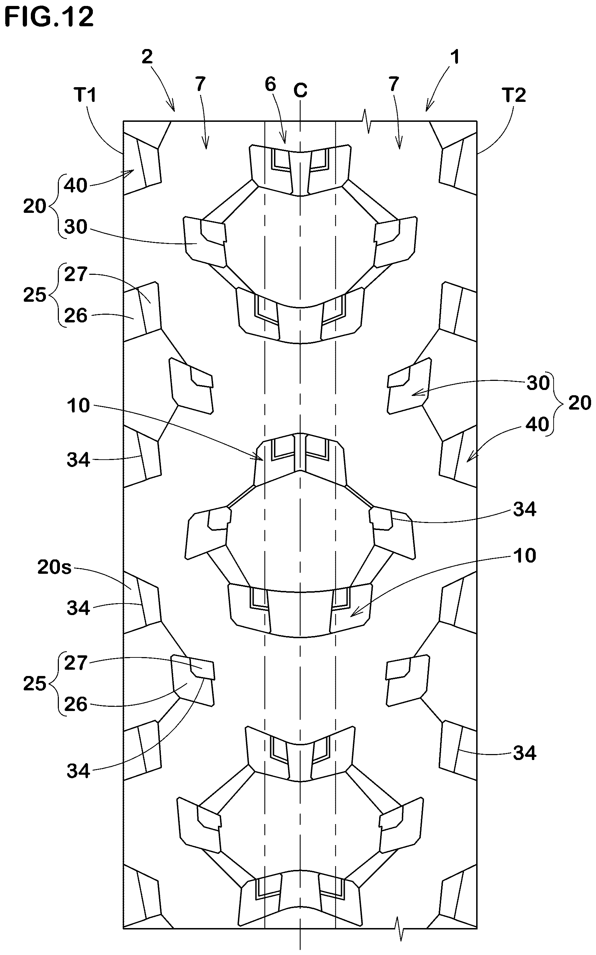

FIG. 12 is a development view of the tread portion 2 according to yet another embodiment of the present invention. As shown in FIG. 12, the outer blocks 20 in this embodiment have ground contacting surfaces (20s) that are not provided with the narrow grooves. The ground contacting surfaces (20s) of the outer blocks 20 in this embodiment are configured as the stepped surfaces 25, and a boundary 34 between the base surface 26 and the protruding surface 27 in each of the ground contacting surfaces (20s) is shown by a solid line. Even in such an embodiment, the protruding surfaces 27 can provide sufficient edge components and can exert excellent roll characteristics.

While detailed description has been made of the two-wheeled vehicle tire for running on rough terrain according to the preferred embodiments of the present invention, the present invention can be embodied in various forms without being limited to the above-illustrated specific embodiments.

### [Examples]

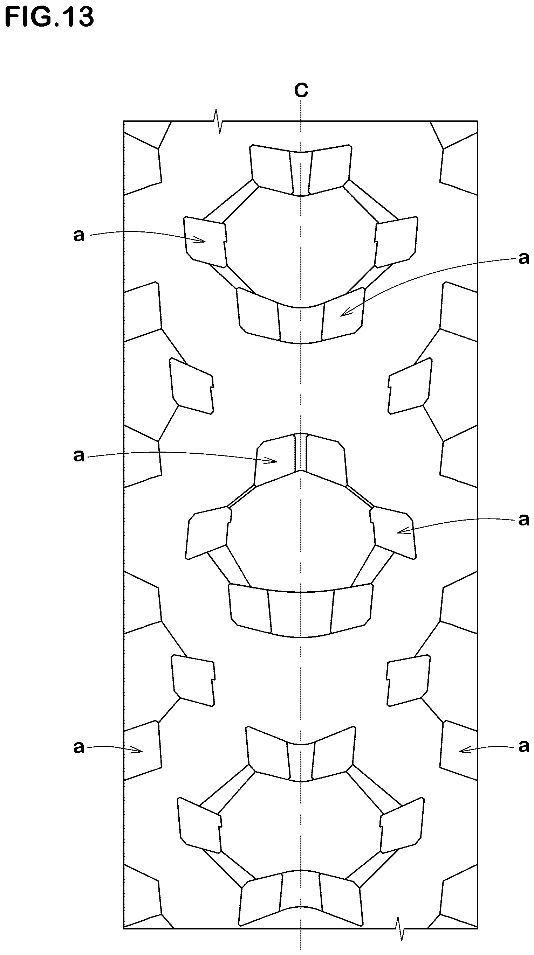

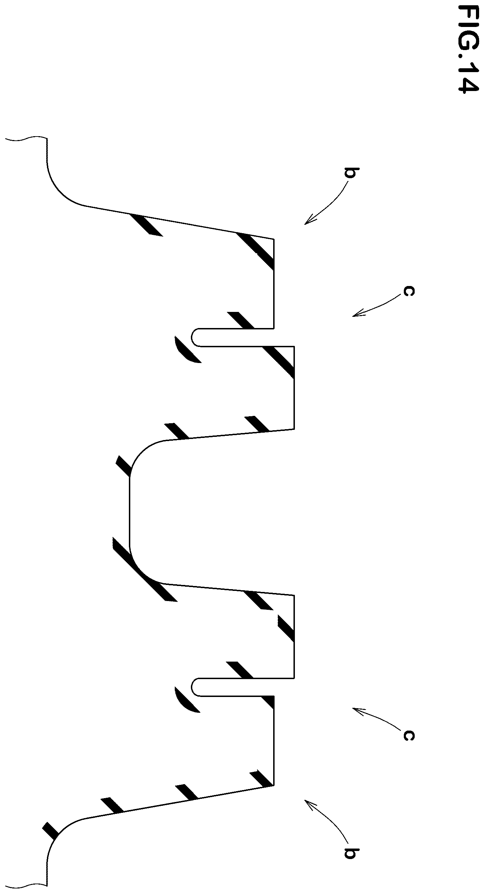

As tires in Examples, two-wheeled vehicle rear tires for running on rough terrain having the basic pattern shown in FIG. 2 were made by way of test. As tires in Reference 1, tires having the tread portion shown in FIG. 13 were made by way of test. In the tires of the Reference 1, the ground contacting surface of each of blocks (a) was configured as a thoroughly flat surface without a protruding surface and without a narrow groove as well. Further, as tires in Reference 2, tires having the tread pattern shown in FIG. 2 were made by way of test. In the tires in the Reference 2, each of crown blocks (b) had a stepped surface (c) as shown in FIG. 14. It should be noted that the gauge of the tread rubber (not shown) is slightly reduced on the radially inner side of the crown blocks (b) in order to adjust the tire outer diameter to stay within the standard. The tires in the References 1 and 2 are substantially the same as the tires in the Examples, except for the above points. These test tires were tested for the roll characteristics, the shock-absorbing properties, the traction performance, and the braking performance. The common specifications of the test tires and the test methods were as follows:
Vehicle used: motocross competition vehicle with displacement of 450 cc
Tire size: 120/90-19
Tire rim size: 2.75WM
Tire inner pressure: 80 kPa

### < Roll Characteristics, Shock-Absorbing Properties, Traction Performance, and Braking Performance >

While a test rider drove the above test vehicle on a motocross course, the roll characteristics, the shock-absorbing properties, the traction performance, and the braking performance were evaluated based on the rider's sensory perception. For each of the above characteristics, properties, and performances, the larger the value, the better the performance is.

The test results are shown in Table 1.

**Table 1**

| | Ref. 1 | Ref. 2 | Example |
|---|---|---|---|
| Figure showing Tread pattern | FIG. 13 | FIG. 2 | FIG. 2 |
| Figure showing Cross-section of Crown block | - | FIG. 14 | FIG. 7 |
| Roll characteristics [evaluation point] | 100 | 100 | 104 |
| Shock-absorbing properties [evaluation point] | 100 | 97 | 100 |
| Traction performance [evaluation point] | 100 | 103 | 103 |
| Braking performance [evaluation point] | 100 | 103 | 106 |

As shown in Table 1, it was confirmed that the tires in the Examples exerted excellent roll characteristics while maintaining the shock-absorbing properties. Further, it was confirmed that the tires in the Examples also had improved traction performance and improved braking performance.

### [Statement of Invention]

The present invention includes the following aspects.

### [Present Invention 1 ]

A two-wheeled vehicle tire for running on rough terrain having a tread portion,
wherein the tread portion including:
a tire equator;
a first tread edge on one side in a tire axial direction of the tire equator;
a second tread edge on the other side in the tire axial direction of the tire equator;
a tread development width from the first tread edge to the second tread edge;
a crown region centered on the tire equator and having a width of 20% of the tread development width;
a pair of side regions on both axially outer sides, one side region on each side, of the crown region;
a plurality of crown blocks provided in the crown region; and
a plurality of outer blocks provided in the side regions,
wherein each of the outer blocks has a ground contacting surface at least provided with a narrow groove or configured as a stepped surface including a base surface and a protruding surface locally protruding outward in a block height direction with respect to the base surface, and
each of the crown blocks has a ground contacting surface provided with the narrow groove and configured as a non-step surface without the protruding surface.

### [Present Invention 2]

The two-wheeled vehicle tire according to Present Invention 1, wherein
the tire is bound with an intended tire rotational direction,
one or more crown blocks have the ground contacting surfaces each including a heel side edge extending on the tire axial direction on a heel side in the tire rotational direction,
the narrow groove provided in the or each crown block having the heel side edge includes an axial portion extending in the tire axial direction, and
an angle between the heel side edge and the axial portion is 20 degrees or less.

### [Present Invention 3]

The two-wheeled vehicle tire according to Present Invention 1 or 2, wherein
the ground contacting surface of at least one of the crown blocks includes a first surface and a second surface divided by the narrow groove having both ends communicating with outer peripheral edges of the ground contacting surface of the at least one of the crown blocks, and
a distance in a tire circumferential direction from a centroid of a virtual ground contacting surface consisting of the first surface, the narrow groove, and the second surface to a centroid of the first surface is 20% or more of a length in the tire circumferential direction of the virtual ground contacting surface on the centroid of the virtual ground contacting surface.

### [Present Invention 4]

The two-wheeled vehicle tire according to any one of Present Inventions 1 to 3, wherein
the tread portion includes a tread bottom surface and tie bars raised locally from the tread bottom surface and connecting adjacent blocks,
each of the crown blocks is connected with one of the crown blocks adjacent thereto and one of the outer blocks adjacent thereto by the tie bars, and
each of the outer blocks is connected with other outer blocks adjacent thereto by one of the tie bars or with the crown blocks adjacent thereto by the tie bars.

### [Present Invention 5]

The two-wheeled vehicle tire according to Present Invention 4, wherein
the outer blocks include a plurality of shoulder blocks each including the first tread edge and a plurality of middle blocks arranged between the shoulder blocks and the crown region,
the middle blocks include first middle blocks connected with the crown blocks by the tie bars and second middle blocks connected with the shoulder blocks by the tie bars, and
the first middle blocks and the second middle blocks are arranged alternately in the tire circumferential direction.

### [Present Invention 6]

The two-wheeled vehicle tire according to any one of Present Inventions 1 to 5, wherein
the narrow groove of each of the crown blocks has both ends communicating with outer peripheral edges of the ground contacting surface of the each of the crown blocks so as to divide the ground contacting surface of the each of the crown blocks into a first surface and a second surface having a larger area than the first surface,
the ground contacting surface of each of the outer blocks is configured as the stepped surface including the protruding surface, and
the sum of areas of the first surfaces and areas of the protruding surfaces is in the range from 20% to 60% of the sum of areas of the ground contacting surfaces of the crown blocks and the outer blocks s in the entire tread portion.

### [Present Invention 7]

The two-wheeled vehicle tire according to any one of Present Inventions 1 to 6, wherein the number N1 of the outer blocks having the protruding surfaces is 75% or less of the total number Nt of the crown blocks and the outer blocks in the entire tread portion.

### [Present Invention 8]

The two-wheeled vehicle tire according to Present Invention 7, wherein the number N2 of the crown and outer blocks having the narrow grooves is in the range from 40% to 200% of the number N1 in the entire tread portion.

### [Description of Reference Signs]

- 2: tread portion
- 6: crown region
- 7: side region
- 10: crown block
- 15: narrow groove
- 20: outer block
- 25: stepped surface
- 26: base surface
- 27: protruding surface
- 28: non-step surface
- T1: first tread edge
- T2: second tread edge
- TWe: tread development width

## Claims

1. A two-wheeled vehicle tire for running on rough terrain having a tread portion,
wherein the tread portion comprising:
a tire equator;
a first tread edge on one side in a tire axial direction of the tire equator;
a second tread edge on the other side in the tire axial direction of the tire equator;
a tread development width from the first tread edge to the second tread edge;
a crown region centered on the tire equator and having a width of 20% of the tread development width;
a pair of side regions on both axially outer sides, one side region on each side, of the crown region;
a plurality of crown blocks provided in the crown region; and
a plurality of outer blocks provided in the side regions,
wherein each of the outer blocks has a ground contacting surface at least provided with a narrow groove or configured as a stepped surface including a base surface and a protruding surface locally protruding outward in a block height direction with respect to the base surface, and
each of the crown blocks has a ground contacting surface provided with the narrow groove and configured as a non-step surface without the protruding surface.

2. The two-wheeled vehicle tire according to claim 1, wherein
the tire is bound with an intended tire rotational direction,
one or more crown blocks have the ground contacting surfaces each including a heel side edge extending on the tire axial direction on a heel side in the tire rotational direction,
the narrow groove provided in the or each crown block having the heel side edge includes an axial portion extending in the tire axial direction, and
an angle between the heel side edge and the axial portion is 20 degrees or less.

3. The two-wheeled vehicle tire according to claim 1 or 2, wherein
the ground contacting surface of at least one of the crown blocks includes a first surface and a second surface divided by the narrow groove having both ends communicating with outer peripheral edges of the ground contacting surface of the at least one of the crown blocks, and
a distance in a tire circumferential direction from a centroid of a virtual ground contacting surface consisting of the first surface, the narrow groove, and the second surface to a centroid of the first surface is 20% or more of a length in the tire circumferential direction of the virtual ground contacting surface on the centroid of the virtual ground contacting surface.

4. The two-wheeled vehicle tire according to any one of claims 1 to 3, wherein
the tread portion includes a tread bottom surface and tie bars raised locally from the tread bottom surface and connecting adjacent blocks,
each of the crown blocks is connected with one of the crown blocks adjacent thereto and one of the outer blocks adjacent thereto by the tie bars, and
each of the outer blocks is connected with other outer blocks adjacent thereto by one of the tie bars or with the crown blocks adjacent thereto by the tie bars.

5. The two-wheeled vehicle tire according to claim 4, wherein
the outer blocks include a plurality of shoulder blocks each including the first tread edge and a plurality of middle blocks arranged between the shoulder blocks and the crown region,
the middle blocks include first middle blocks connected with the crown blocks by the tie bars and second middle blocks connected with the shoulder blocks by the tie bars, and
the first middle blocks and the second middle blocks are arranged alternately in the tire circumferential direction.

6. The two-wheeled vehicle tire according to any one of claims 1 to 5, wherein
the narrow groove of each of the crown blocks has both ends communicating with outer peripheral edges of the ground contacting surface of the each of the crown blocks so as to divide the ground contacting surface of the each of the crown blocks into a first surface and a second surface having a larger area than the first surface,
the ground contacting surface of each of the outer blocks is configured as the stepped surface including the protruding surface, and
the sum of areas of the first surfaces and areas of the protruding surfaces is in the range from 20% to 60% of the sum of areas of the ground contacting surfaces of the crown blocks and the outer blocks s in the entire tread portion.

7. The two-wheeled vehicle tire according to any one of claims 1 to 6, wherein the number N1 of the outer blocks having the protruding surfaces is 75% or less of the total number Nt of the crown blocks and the outer blocks in the entire tread portion.

8. The two-wheeled vehicle tire according to claim 7, wherein the number N2 of the crown and outer blocks having the narrow grooves is in the range from 40% to 200% of the number N1 in the entire tread portion.
